(19) Europäisches Patentamt
European Patent Office
Office européen des brevets

(11) Veröffentlichungsnummer: **0 021 216**
**B1**

# (12) EUROPÄISCHE PATENTSCHRIFT

(45) Veröffentlichungstag der Patentschrift: **25.01.84**

(51) Int. Cl.³: **C 08 G 79/04,** C 08 G 63/62, C 08 G 63/68

(21) Anmeldenummer: **80103194.9**

(22) Anmeldetag: **09.06.80**

(54) **Verfahren zur Herstellung von aromatischen thermoplastischen Polyphosphonatocarbonaten sowie neue Polyphosphonatocarbonate.**

(30) Priorität: **22.06.79 DE 2925208**

(43) Veröffentlichungstag der Anmeldung: **07.01.81 Patentblatt 81/1**

(45) Bekanntmachung des Hinweises auf die Patenterteilung: **25.01.84 Patentblatt 84/4**

(84) Benannte Vertragsstaaten: **DE FR GB IT NL**

(56) Entgegenhaltungen:
**FR - A - 1 402 407**
**GB - A - 1 025 422**
**US - A - 3 378 523**

(73) Patentinhaber: **BAYER AG, Zentralbereich Patente, Marken und Lizenzen, D-5090 Leverkusen 1, Bayerwerk (DE)**

(72) Erfinder: **Schmidt, Manfred, Dr., c/o Mobay Chemical Corporation, New Martinsville West Virginia 26 155 (US)**
Erfinder: **Bottenbruch, Ludwig, Dr., Wöhlerstrasse 5, D-4150 Krefeld (DE)**
Erfinder: **Freitag, Dieter, Dr., Hasenheide 10, D-4150 Krefeld 1 (DE)**
Erfinder: **Nouvertné, Werner, Dr., Scheiblerstrasse 95, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von aromatischen thermoplastischen Polyphosphonatocarbonaten sowie neue Polyphosphonatocarbonate

Gegenstand der vorliegenden Erfindung ist ein Verfahren zur Herstellung von aromatischen, thermoplastischen Polyphosphonatocarbonaten, das dadurch gekennzeichnet ist, dass man Diphenole mit Diarylcarbonaten und Phosphonsäurediarylestern, gegebenenfalls unter Mitverwendung von drei – oder mehr als drei – funktionellen Verbindungen in Mengen von 0,05 bis 3 Mol-%, bezogen auf 100 Mol-% eingesetzter aromatischer Dihydroxyverbindungen beziehungsweise – im Falle der Triarylphosphate – auf 100 Mol-% des eingesetzten Gemisches aus Diarylcarbonat und Phosphonsäurediarylester, in Gegenwart basischer Katalysatoren bei Temperaturen zwischen 80 und 340 °C, vorzugsweise zwischen 100 und 320 °C und Drücken zwischen 790 mbar und 0,133 mbar vorzugsweise zwischen 460 mbar und 1,33 mbar unter Inertgasatmosphäre umsetzt, wobei das Molverhältnis von Diarylcarbonat zu Phosphonsäurediarylester zwischen 5 zu 95 und 95 zu 5, vorzugsweise zwischen 15 zu 85 und 85 zu 15 liegt, und das Molverhältnis oder Diphenole zu der Summe der Diarylcarbonate und Phosphonsäurediarylester zwischen 0,91 und 0,99, vorzugsweise bei 0,93 bis 0,97 liegt, und man am Ende der jeweiligen Polykondensation den basischen Katalysator neutralisiert.

Die jeweilige Reaktionszeit liegt je nach dem angestrebten Molekulargewicht und der jeweiligen Reaktionsgeschwindigkeit zwischen 20 und 5 Std., vorzugsweise zwischen 15 und 7 Std.

Die erfindungsgemäss erhältlichen Polyphosphonatocarbonate sollen Zahlenmittelmolekulargewichte $\bar{M}n$ (gemessen membran-osmo-metrisch in Dioxan als Lösungsmittel) von mindestens 11 000, vorzugsweise von 11 000 bis 200 000 und insbesondere von 20 000 bis 80 000 haben.

Die erfindungsgemäss erhältlichen Polyphosphonatocarbonate lassen sich ausserdem durch relative Lösungsviskositäten $\eta_{rel}$ von 1,20 bis 2,00, vorzugsweise von 1,24 bis 1,40 charakterisieren ($\eta_{rel}$ gemessen bei 25 °C in Konzentrationen c von 0,5 g pro 100 ml $CH_2Cl_2$).

Die erfindungsgemäss erhältlichen Polyphosphonatocarbonate entsprechen vorzugsweise der Formel (1)

$$Ar{-}O{-}\overset{\overset{\displaystyle O}{\|}}{M}{-}O{-}X{-}O{-}\left[\overset{\overset{\displaystyle O}{\|}}{M}{-}O{-}X{-}O\right]_n{-}\overset{\overset{\displaystyle O}{\|}}{M}{-}O{-}Ar \qquad (1)$$

worin

Ar ein Arylrest, mit vorzugsweise 6 bis 14 C-Atomen, der unsubstituiert oder durch $C_1$–$C_4$-Alkylgruppen und/oder durch F-, Cl- oder Br-Substituenten substituiert sein kann, wobei die Zahl der Substituenten von 1 bis 5 liegt, insbesondere Phenyl, $C_1$–$C_4$-alkylsubstituiertes Phenyl und/oder halogensubstituiertes Phenyl ist,

$\overset{\overset{O}{\|}}{M}$ das Bindeglied $-\overset{\overset{O}{\|}}{C}-$ oder $-\underset{\underset{R}{|}}{\overset{\overset{O}{\|}}{P}}-$ ist, mit

R = $C_1$–$C_{12}$-Alkyl,
$C_2$–$C_{12}$-Alkenyl,
$C_6$–$C_{30}$-Cycloalkyl, Cycloalkenyl, Aryl,
$C_7$–$C_{30}$-Arylalkyl oder $C_8$–$C_{30}$ Arylalkenyl, wobei die Arylgruppe gegebenenfalls substituiert sein kann, durch 1–5 $C_1$–$C_4$-Alkylgruppen und/oder 1–5 Halogenatome wie F, Cl oder Br;

wobei das Verhältnis der Bindeglieder $-\underset{\underset{O}{\|}}{C}-$ und $-\overset{\overset{R}{|}}{\underset{\underset{O}{\|}}{P}}-$ im Mittel jeweils zwischen 5:95 und 95:5, vorzugsweise zwischen 15:85 und 85:15 liegt, X der Rest eines Diphenols ist und worin

n der mittlere Polymerisationsgrad ist, der aus den jeweiligen Molekulargewichten $\bar{M}n$ (Zahlenmittel) von mindestens 11 000, vorzugsweise von 11 000 bis 200 000 und insbesondere von 20 000 bis 80 000 der Polyphosphonatocarbonate resultiert.

Die Arylreste R können ebenfalls $C_1$–$C_4$-alkylsubstituiert und/oder halogensubstituiert sein.

Als Halogensubstituenten kommen in allen Fällen beispielsweise F, Cl oder Br in Frage.

Die erfindungsgemäss erhältlichen Polyphosphonatocarbonate können jeweils sowohl auf einheitlichen Diphenol-Resten X als auch auf verschiedenen, also 2 oder mehr als 2 verschiedenen Diphenolresten aufgebaut sein.

Als Diphenolreste X kommen vorzugsweise solche mit 6 bis 30 C-Atomen in Betracht, die ausserdem noch Schwefel oder Sauerstoff als Heteroatome enthalten können, und wiederum durch $C_1$–$C_4$-Alkyl und/oder durch Halogen substituiert sein können. Geeignete Diphenolreste X sind beispielsweise Phenylen, Diphenylen, Alkyliden-bis-phenylen, Alkylen-bis-phenylen, Cycloalkylidenbisphenylen, Cycloalkylen-bis-phenylen, Thio-bis-phenylen, Oxi-bis-phenylen, Sulfonyl-bis-phenylen, Carbonyl-bis-phenylen oder Naphthylen, die jeweils durch $C_1$–$C_4$-Alkyl und/oder durch Halogen wie F, Cl oder Br substituiert sein können.

Die nach dem erfindungsgemässen Herstellungsverfahren erhaltenen Polyphosphonatocarbonate sind Thermoplaste hoher Brandwidrigkeit und Zähigkeit, die ohne thermische Schädigung in technisch gebräuchlichen Verarbeitungsaggregaten wie Spritzgussmaschinen und Extrudern verformbar sind. Die besonders bevorzugten halogenfreien Spezies der allgemeinen Struktur (1) sind ebenfalls Thermoplaste hoher Brandwidrigkeit, die den Nachteil der erschwerten Verarbeitbarkeit brandwidriger, halogenhaltiger, hochmolekularer Polycarbonate nicht aufweisen (siehe US-PS 3 334 154).

Gegenstand der vorliegenden Erfindung sind somit auch die erfindungsgemäss erhältlichen Polyphosphonatocarbonate, die im Gegensatz zu den bekannten des Standes der Technik keine

sauren «Phosphor-Endgruppen» also speziell keine HO–P Struktur, insbesondere keine

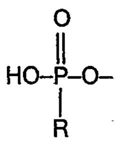 Strukturen enthalten.

Bislang erfolgte die Herstellung von Phosphonatopolycarbonaten ausschliesslich unter Verwendung der entsprechenden Phosphonsäuredihalogenide, insbesondere Dichloride (siehe dazu US-PS 3 378 523, BE-PS 610 954, GB-PS 1 025 422, DAS 1 199 499, FR-PS 1 402 407 bzw. BE-PS 670 960).

Derartig hergestellte Produkte sind jedoch thermisch nicht stabil und daher technisch bedeutungslos. (Vergleiche auch Veröffentlichung von H.S. Kolesnikow et al. in Hochmolekulare Verbindungen (russisch), A 9, Nr. 10, Seiten 2246 bis 2249 (1967), insbesondere Seite 2249).

Darüber hinaus besitzen diese Herstellungsverfahren den Nachteil, dass nach beendeter Synthese die Phasentrennung von organischer Phase und wässrig-alkalischer Waschphase schwierig ist (Mulmschichtbildung im Separator).

Bekannt ist auch (DOS 2 117 509), dem Polycarbonat geringe Mengen an Phosphoniten der Formel R–P (–OR)$_2$ zuzusetzen zum Zweck der thermischen Stabilisierung des Polycarbonats.

Bekannt ist auch Phosphorigsäureesterdihalogenide der Formel

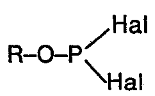 (gemäss DOS 2 117 510)

oder Phosphonigsäuredihalogenide der Formel

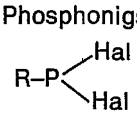 (gemäss DOS 2 117 176)

in geringen Mengen bei der Polycarbonatherstellung mitzuverwenden, um die Polycarbonate thermisch zu stabilisieren.

Bekannt ist auch, Phosphortrihalogenide bei der Polycarbonatherstellung mitzuverwenden. Die erhaltenen Copolycarbonatphosphite sind jedoch nur bei gleichzeitigem Zusatz von Epoxiden thermisch stabil (DOS 2 040 251).

Erfindungsgemäss geeignete Phosphonsäure-diarylester des Typs

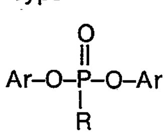

worin

Ar und R die für Formel (1) genannte Bedeutung haben, sind beispielsweise solche der Formel (2)

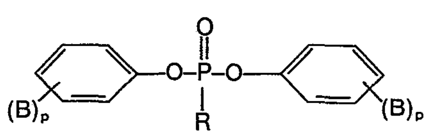 (2)

mit R = $C_1$–$C_{12}$-Alkyl,
$C_2$–$C_{12}$-Alkenyl,
$C_6$–$C_{30}$-Cycloalkyl, Cycloalkenyl, Aryl,
$C_7$–$C_{30}$-Arylalkyl oder $C_8$–$C_{30}$-Arylalkenyl, wobei die Arylgruppe gegebenenfalls substituiert sein kann durch 1–5 $C_1$–$C_4$-Alkylgruppen und/oder 1–5 Halogenatome wie F, Cl oder Br;
mit B = eine $C_1$–$C_4$ Alkylgruppe und/oder F, Cl oder Br
und mit p = 0 oder eine ganze Zahl von 1–5.

Besonders bevorzugt werden halogenfreie Alkyl- und Arylphosphonsäurediphenylester; insbesondere bevorzugt wird Methylphosphonsäurediphenylester und Phenylphosphonsäurediphenylester.

Weitere Beispiele für erfindungsgemäss geeigneten Phosphonsäure-diarylester sind
Cyclohexylphosphonsäurediphenylester,
Äthylphosphonsäurediphenylester,
2-Phenyl-äthylenphosphonsäurediphenylester,
Butylphosphonsäurediphenylester und
Isopropylphosphonsäurediphenylester.

Geeignete Diphenole des Typs HO–X–OH, worin X vorzugsweise 6 bis 30 C-Atome hat, sind beispielsweise die der folgenden Formeln (3) bis (6)

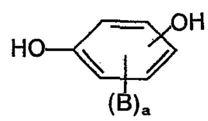 (3)

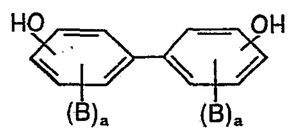 (4)

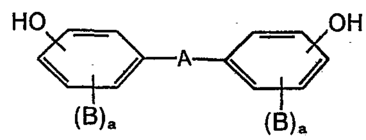 (5)

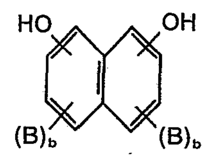 (6)

mit B = eine $C_1$–$C_4$-Alkylgruppe und/oder F, Cl oder Br,
a = 0 oder eine ganze Zahl von 1–4 und
b = 0 oder eine ganze Zahl von 1–3,
wobei A eine $C_1$–$C_8$-Alkylen, $C_2$–$C_8$-Alkyliden, $C_5$–$C_6$-Cycloalkylen, $C_5$–$C_6$-Cycloalkyliden, $-SO_2-$, –CO–, –O– oder –S– bedeuten kann.

Bevorzugt werden aromatische Dihydroxyverbindungen der Struktur (3), (4) und (5) wie Hydrochinon, 4,4′-Dihydroxydiphenyl, 4,4′-Dihydroxydiphenyloxid, 4,4′-Dihydroxydiphenylsulfid, 4,4′-Sulfonyldiphenol und Bis-(4-hydroxyphenyl)-alkane und -cycloalkane wie 2,2-Bis-(4-hydroxyphenyl)-methan, 2,2-Bis-(4-hydroxyphenyl)-propan (= Bisphenol-A), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Besonders bevorzugt werden 4,4′-Dihydroxydiphenyl, 4,4′-Sulfonyldiphenol, 1,1-Bis-(4-hydroxyphenyl)-cyclohexan, 4,4′-Dihydroxydiphenylsulfid und 2,2-Bis-(4-hydroxyphenyl)-propan (Bisphenol-A).

Die nach dem erfindungsgemässen Verfahren erhaltenen hochmolekularen thermoplastischen aromatischen Polyphosphonatocarbonate können durch den Einbau von Mengen zwischen 0,05 und 3,0 Mol-% (bezogen auf 100 Mol-% eingesetzter aromatischer Dihydroxyverbindungen) an drei oder mehr als drei funktionellen Verbindungen, beispielsweise solchen mit drei oder mehr als drei phenolischen Hydroxyverbindungen verzweigt sein. Als dreifunktionelle Verzweigungskomponente können ebenfalls Triarylphosphate wie beispielsweise Triphenylphosphat in Mengen zwischen 0,05 und 3,0 Mol-% (bezogen auf 100 Mol-% des eingesetzten Gemisches aus Diarylcarbonat und Phosphonsäurediarylester) einkondensiert werden, wodurch das resultierende aromatische Polyphosphonatocarbonat durch Phosphorsäureestergruppen verzweigt wird.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5′-methyl-benzyl)-4-methylphenol, 2-(4-Hydroxyphenyl)-2-(2,4-dihydroxyphenyl)-propan und 1,4-Bis-(4,4″-dihydroxytriphenyl-methyl)-benzol.

Erfindungsgemäss geeignete Diarylcarbonate des Typs $Ar{-}O{-}\underset{\underset{O}{\|}}{C}{-}O{-}Ar$, worin Ar die für Formel (1) genannte Bedeutung hat, sind beispielsweise

Diphenylcarbonat oder

Di-(p-tolyl)-carbonat.

Insbesondere wird Diphenylcarbonat bevorzugt.

Gemäss dem erfindungsgemässen Verfahren werden jeweils Gemische aus 5 bis 95 Mol-% an Diarylcarbonaten mit 95 bis 5 Mol-% an Phosphonsäurediarylestern jeweils mit 91 bis 99 Mol-%, insbesondere mit 93 bis 97 Mol-% an Diphenolen in Anwesenheit von $10^{-7}$ bis $2 \cdot 10^{-4}$ Mol, insbesondere von $7 \cdot 10^{-6}$ bis $2 \cdot 10^{-5}$ Mol (bezogen auf 1 Mol Diphenol), eines basischen Katalysators bei erhöhter Temperatur unter Einleiten von Inertgas, vorzugsweise von Stickstoff, und bei vermindertem Druck zur Reaktion gebracht.

Ausser Stickstoff sind noch als Inertgase Kohlendioxid und Helium verwendbar.

Als geeignete basische Katalysatoren können verwendet werden:

Alkoholate der Alkali- und/oder Erdalkalimetalle wie

Natriummethylat oder Calciumethylat,

Natrium-, Kalium- oder Lithiumphenolate,

Natrium-, Kalium- oder Lithiumsalze der Diphenole der Formel (3) bis (6),

Hydride der Alkali und/oder Erdalkalimetalle wie

Lithiumhydrid, Natriumborhydrid oder Calciumhydrid,

Oxide der Alkali- und/oder Erdakalimetalle wie Lithiumoxid, Natriumoxid und/oder Bariumoxid,

Amide der Alkali- und/oder Erdalkalimetalle wie

Natriumamid und Calciumamid sowie basisch reagierende Salze oder Alkali- und/oder Erdalkalimetalle organischer oder anorganischer Säuren wie Natriumacetat, Natriumbenzoat oder Natriumcarbonat. Bevorzugt werden Alkaliphenolate wie Natriumphenolat eingesetzt.

Entsprechend dem erfindungsgemässen Verfahren werden die Phosphonsäurediarylester mit den Diphenolen und Diarylcarbonaten in Anwesenheit der genannten Menge der erwähnten basischen Katalysatoren bei Temperaturen zwischen 80 und 340 °C, insbesondere zwischen 100 und 320 °C, umgesetzt und unter Abdestillieren der flüchtigen aromatischen Monohydroxyverbindungen bei erhöhter Temperatur, im Vakuum und unter Einleiten von Stickstoff, so lange zur Reaktion gebracht, bis der gewünschte Kondensationsgrad erreicht ist, was durch Probenentnahme festgestellt werden kann.

Die Neutralisation der basischen Katalysatoren kann mit beliebigen basenbindenden Substanzen erfolgen, wobei im Normalfall exakt stöchiometrische Mengen zur Neutralisation notwendig sind.

Geeignete basenbindende Substanzen sind beispielsweise Dialkylsulfate wie Dimethylsulfat, Diethylsulfat, Säurechloride wie Benzoylchlorid und Chlorameisensäureester wie Phenylchlorameisensäureester, womit der basische Katalysator in der Polymerschmelze gegen Reaktionsende neutralisiert werden kann. Die gebildeten flüchtigen organischen Neutralisationsprodukte werden im Vakuum durch Abdestillieren aus der Schmelze entfernt. Nach Neutralisation des Katalysators kann die Umesterung noch im begrenztem Masse zur Erreichung eines gewünschten Molekulargewichtes weitergeführt werden.

Nach Beendigung der Polykondensation wird die gebildete Schmelze des Polyphosphonatocarbonats in bekannter Weise in Granulate oder direkt in geformte Gebilde wie Filme, Fasern oder Borsten übergeführt. Die nach dem erfindungsgemässen Verfahren erhaltenen aromatischen Polyphosphonatocarbonate lassen sich in Schmelzfluss ohne thermische Schädigung zu geformten Gebilden hoher Wärmeformbeständigkeit verarbeiten und zeigen eine hervorragende Brandwidrigkeit sowie gute mechanische Eigenschaften.

Die erfindungsgemäss erhältlichen Polyphosphonatocarbonate sind löslich in Methylenchlorid, 1,1,2,2-Tetrachlorethan, Chlorbenzol, 1,2-Dichlorbenzol, Chloroform, 1,1,2-Trichlorethylen, Dioxan und Hexamethylen-phosphortriamid (HMPT), mit Ausnahme der Polyphosphonatocarbonate der Struktur (1), in denen X der Thio-bis-phenylen-Rest ist.

Den erfindungsgemäss erhältlichen aromatischen Polyphosphonatocarbonaten können ausserdem die für Polycarbonate üblichen Materialien wie Pigmente, antistatische Mittel, Formtrennmittel, thermische Stabilisatoren, Ultraviolettlichtstabilisatoren und verstärkende Füllstoffe zugemischt werden.

Die erfindungsgemäss erhältlichen thermoplastischen aromatischen Polyphosphonatocarbonate können bei 240 bis 320 °C extrudiert und zu Prüfkörpern ausgeformt werden.

Die Prüfung der Wärmeformbeständigkeit erfolgte durch Messung des Vicat-Erweichungspunktes VSP gemäss DIN 53 460 oder ISO/R 75. Die Prüfung des Verhaltens bei Schlagbeanspruchung erfolgte sowohl durch Messung der Schlagzähigkeit $a_n$ nach Charpy gemäss DIN 53 453 oder nach ASTM D 256 als auch durch Messung der Kerbschlagzähigkeit $a_k$ nach Charpy gemäss DIN 53 453 oder ASTM D 256. Die Härtemessung erfolgte durch Messung der Kugeldruckhärte HK gemäss DIN 53 456. Die Prüfung der mechanisch-elastischen Eigenschaften erfolgte durch Spannungs-Verformungsversuche wie durch Messung des Biege-E-Moduls gemäss DIN 53 457, durch Messung des Zug-E-Moduls gemäss DIN 53 457, durch Messung der Reissfestigkeit $\delta_R$, der Reissdehnung $\varepsilon_R$, der Streckfestigkeit $\delta_S$ und der Streckdehnung $\varepsilon_S$ gemäss DIN 53 455/1968 oder ASTM D 638.

Die Prüfung des Brandverhaltens erfolgte sowohl durch Messung des $O_2$-Index gemäss ASTM D 2863–70 als auch durch Messung der Nachbrennzeit gemäss dem UL-Test (Subj. 94).

Hierbei werden Teststäbe mit den Abmessungen: 127 × 12,7 × 1,6 mm ($^1/_{16}$″) und 127 × 12,7 × 3,2 mm ($^1/_8$″) dem Testverfahren gemäss Underwriters Laboratories, Inc. Bulletin 94, Verbrennungstest zur Klassifizierung von Materialien, unterworfen.

Gemäss diesem Testverfahren wurden die so geprüften Materialien entweder mit UL-94 V-O, UL-94 V-I und UL-94 V-II klassifiziert, und zwar auf der Basis der mit den 10 Proben erhaltenen Ergebnisse. Die Kriterien für jede dieser V-Klassifizierungen gemäss UL-94 sind kurz wie folgt:

UL-94 V-O

Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I

Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94 V-II

Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern derselbe wurde nach den Standardbedingungen der vorliegenden Erfindung als «brennt» bezeichnet. Die Vorschrift UL-94 erfordert weiterhin, dass alle Teststäbe eines Versuchs die jeweilige V-Bewertung erfüllen müssen, anderenfalls erhalten die 10 Teststäbe die Bewertung des schlechtesten Einzelstabes. Wenn beispielsweise 1 Stab mit UL-94 V-II bewertet wird und die anderen 9 Teststäbe mit UL-94 V-O bewertet werden, dann erhalten alle 10 Stäbe die Bewertung UL-94 V-II.

Beispiel 1

| | |
|---|---|
| 3592 g (16,79 Mol) | Diphenylcarbonat, |
| 2068 g ( 8,34 Mol) | Methylphosphonsäurediphenylester, |
| 2712 g (11,89 Mol) | Bisphenol A, |
| 2214 g (11,90 Mol) | 4,4′-Dihydroxydiphenyl, |
| 7,6 g ($1,21 \cdot 10^{-2}$ Mol) | 1,4-Bis-(4,4″-dihydroxytriphenyl-methyl)-benzol und |
| 0,2 g ($1,72 \cdot 10^{-3}$ Mol) | Natriumphenolat |

werden unter Stickstoff bei 230 °C intensiv verrührt. Anschliessend wird innerhalb von 5 Stunden bei einer von 230 auf 280 °C ansteigenden Temperatur und einem von 400 mbar auf 10 mbar allmählich absinkendem Druck über eine auf 100 °C beheizte Kolonne Phenol abdestilliert. Man setzt die Reaktion nochmals 5 Stunden bei 290 bis 310 °C und bei einem Druck von 0,3 mbar fort, wobei die Umdrehungszahl des Rührers auf einen konstanten Wert absinkt. Nach Belüften des Rührautoklavs mit Stickstoff werden 0,266 g ($1,72 \cdot 10^{-3}$ Mol) Diethylsulfat zugegeben, 10 Minuten verrührt und nochmals 20 Minuten im Vakuum destilliert. Dann lässt man das Polymer bei 300 °C unter Stillstand des Rührers 1 Stunde absitzen und isoliert das Polymer anschliessend durch Abspinnen unter Druck (ca. 10 bar) und Granulieren des Schmelzstranges, wobei man 5 kg eines hochmolekularen amorphen Polyphosphonatocarbonats erhält mit einem Zahlenmittel-Molekulargewicht $\bar{M}_n$ = 17.000 und einer relativen Lösungsviskosität $\eta$ rel = 1,327 (gemessen bei 25 °C in einer Lösung von 0,5 g des Polymers in 100 ml Methylenchlorid), Phosphorgehalt = 4,5%.

Die durch Differentialthermoanalyse (DTA) ermittelte Glasübergangstemperatur $T_G$ des Polymers aus Beispiel 1 beträgt $T_G$ = 147 °C.

Eine mögliche theoretische Struktur des Polyphosphonatocarbonats gemäss Beispiel 1 ist folgende:

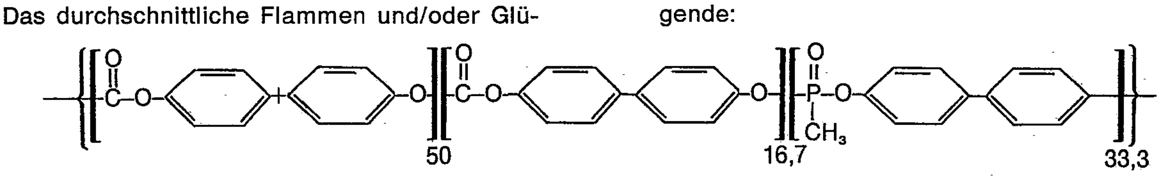

Beispiel 2

4020 g (18,79 Mol) Diphenylcarbonat,
1552 g ( 6,26 Mol) Methylphosphonsäurediphenylester,
4472 g (19,61 Mol) Bisphenol-A,
1108 g ( 5,96 Mol) 4,4'-Dihydroxydiphenyl,
7,6 g ($1{,}21 \cdot 10^{-2}$ Mol) 1,4-Bis-(4,4''-dihydroxytriphenyl-methyl)-benzol und
0,15 g ($1{,}293 \cdot 10^{-3}$ Mol) Natriumphenolat

werden analog der in Beispiel 1 geschilderten Verfahrensweise umgesetzt, wobei gegen Reaktionsende 0,202 g ($1{,}293 \cdot 10^{-3}$ Mol) Chlorameisensäurephenylester zur Neutralisation des Natriumphenolats zugegeben werden. Man erhält 5 kg eines Polyphosphonatocarbonats der theoretischen Struktur

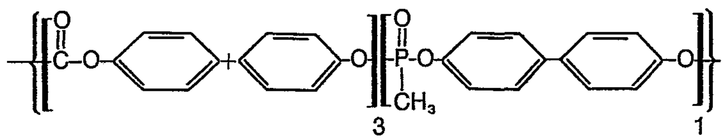

und mit folgenden Kenndaten:

$\bar{M}_n$ = 16 200
$\eta$rel = 1,323
Phosphorgehalt = 3,1%
$T_G$ = 148 °C (nach DTA)

Die folgende Tabelle beinhaltet die Brandwidrigkeitswerte, Wärmeformbeständigkeits-Prüfwerte, Schlagbeanspruchungs-Prüfwerte und Prüfwerte der mechanisch-elastischen Eigenschaften der gemäss den Beispielen 1 und 2 erhaltenen Polyphosphonatocarbonate.

Tabelle

Brandwidrigkeitswerte und mechanische Prüfwerte der aromatischen Polyphosphonatocarbonate gemäss den Beispielen 1 und 2:

| Prüfung | Prüfnorm | Prüfwerte: Beispiel 1 | Beispiel 2 |
|---|---|---|---|
| $O_2$-Index | ASTM D 2863-70 | 59% | 51% |
| UL-Test (Subj. 94) | | V–O (1/16") | V–O (1/16") |
| Vicat B-Temperatur | DIN 53 460 | 141°C | 142°C |
| Schlagzähigkeit $a_n$ | DIN 53 454 | ungebrochen | ungebrochen |
| Kerbschlagzähigkeit $a_k$ | DIN 53 453 | 20 | 22 |
| Kugeldruckhärte HK | DIN 53 456 | 112 MPa | 120 MPa |
| Biege-E-Modul | DIN 53 457 | 2300 MPa | 2400MPa |
| Zug-E-Modul | DIN 53 457 | 2400 MPa | 2500 MPa |
| Streckfestigkeit $\delta_S$ | DIN 53 455 | 66 MPa | 70 MPa |
| Streckdehnung $\varepsilon_S$ | DIN 53 455 | 9% | 10% |
| Reissfestigkeit $\delta_R$ | DIN 53 455 | 61 MPa | 58 MPa |
| Reissdehnung $\varepsilon_R$ | DIN 53 455 | 59% | 26% |
| $\eta$rel (nach Extrusion bei 300°C) | | 1,321 | 1,317 |

Weitere Beispiele der nach dem erfindungsgemässen Verfahren hergestellten aromatischen Polyphosphonatocarbonat:

Beispiel 3

100,5 g (0,4696 Mol) Diphenylcarbonat,
38,8 g (0,1564 Mol) Methylphosphonsäurediphenylester,
0,15 g ($0{,}46 \cdot 10^{-3}$ Mol) Triphenylphosphat,
90,5 g (0,3969 Mol) Bisphenol-A,
43,25 g (0,1984 Mol) 4,4'-Dihydroxydiphenylsulfid und
5 mg ($0{,}431 \cdot 10^{-5}$ Mol) Natriumphenolat

werden analog der in Beispiel 1 geschilderten Verfahrensweise umgesetzt und am Reaktionsende mit 6,8 mg Chlorameisensäurephenylester neutralisiert.

Das resultierende Polyphosphonatocarbonat der theoretischen Struktur

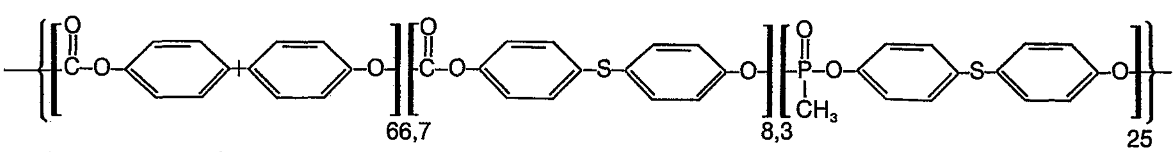

besitzt folgende Kenndaten:

$\eta$rel = 1,345
$\bar{M}_n$ = 20.500
p = 2,99%; S = 4,11%
$T_G$ = 124 °C (nach DTA)

Beispiel 4

89,8 g (0,4196 Mol) Diphenylcarbonat
51,7 g (0,2084 Mol) Methylphosphonsäurediphenylester,
0,15 g $0{,}46 \cdot 10^{3}$ Mol) Triphenylphosphat

90,5 g (0,3969 Mol) Bisphenol-A,
43,25 g (0,1984 Mol) 4,4'-Dihydroxydiphenylsulfid und
5 mg (0,431 · $10^{-5}$ Mol) Natriumphenolat

werden analog der in Beispiel 3 geschilderten Verfahrensweise umgesetzt. Das resultierende Polyphosphonatocarbonat der theoretischen Struktur

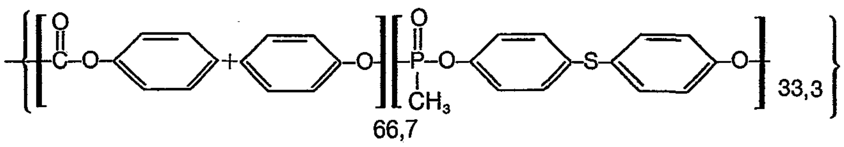

besitzt folgende Kenndaten:
ηrel = 1,420
$\bar{M}_n$ = 28 700
P = 2,93%
S = 3,03%
$T_G$ = 120 °C (nach DTA)

Beispiel 5

155,1 g (62,54 · $10^{-2}$ Mol) Methylphosphonsäurediphenylester
7,04 g (3,29 · $10^{-2}$ Mol) Diphenylcarbonat,
113,6 g (61,08 · $10^{-2}$ Mol) 4,4'-Dihydroxydiphenyl und
10 mg (0,862 · $10^{-5}$ Mol) Natriumphenolat

werden analog der in Beispiel 1 geschilderten Verfahrensweise umgesetzt und am Reaktionsende mit 13,5 mg Chlorameisensäurephenylester neutralisiert. Das resultierende Polyphosphonatocarbonat der Struktur

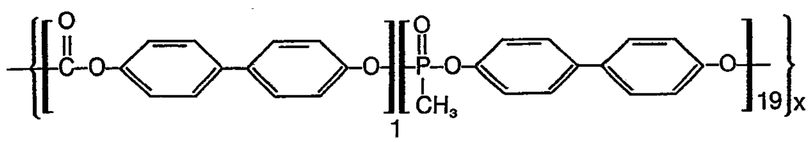

besitzt folgende Kenndaten:
ηrel = 1,293
$\bar{M}_n$ = 24.800
P = 10,7%
$T_G$ = 129 °C (nach DTA)

Beispiel 6

133,8 g (62,54 · $10^{-2}$ Mol) Diphenylcarbonat,
8,16 g ( 3,29 · $10^{-2}$ Mol) Methylphosphonsäurediphenylester,
139,3 g (61,08 · $10^{-2}$ Mol) Bisphenol-A und
5 mg (0,431 · $10^{-5}$ Mol) Natriumphenolat

werden analog der in Beispiel 3 geschilderten Verfahrensweise umgesetzt. Das resultierende Polyphosphonatocarbonat der Struktur

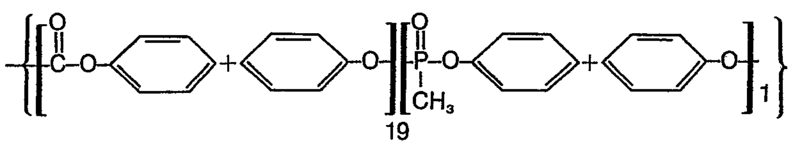

besitzt folgende Kenndaten:
ηrel = 1,316
$\bar{M}$ = 27.200
P = 0,61%
$T_G$ = 143 °C (nach DTA)

Vergleichsbeispiele

a) Das gemäss Beispiel 1 der US-PS 3 378 523 hergestellte Polyphosphonatocarbonat besitzt eine relative Lösungsviskosität ηrel von 1,58, gemessen in 0,5 gew.-%iger Lösung bei 25 °C in Methylenchlorid, sowie 420 ppm der Phenylphosphonsäureesterstruktur

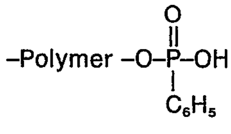

Ein aus diesem Polymer nach Extrusion bei 270 °C erhaltenes Granulat besitzt eine ηrel von 1,21; daraus hergestellte Formkörper sind spröde und brechen leicht.

b) Das gemäss Beispiel VIII der US-PS 3 378 523 hergestellte Polyphosphonatocarbonat besitzt eine relative Lösungsviskosität ηrel von 1,30 und 530 ppm Phenylphosphonsäureesterstrukturen

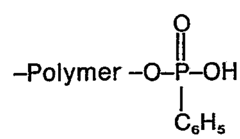

Ein aus diesem Polymer erhaltenes Granulat besitzt nach der Extrusion bei 270 °C eine relative Lösungsviskosität von ηrel = 1,17.

**Patentansprüche**

1. Verfahren zur Herstellung von aromatischen, thermoplastischen Polyphosphonatocarbonaten, das dadurch gekennzeichnet ist, dass man Diphenole mit Diarylcarbonaten und Phosphonsäurediarylestern gegebenenfalls unter Mitverwendung von drei – oder mehr als drei – funktionellen Verbindungen in Mengen von 0,05 bis 3 Mol-%, bezogen auf 100 Mol-% eingesetzter aromatischer Dihydroxyverbindungen beziehungsweise – im Falle der Triarylphosphate – auf 100

Mol-% des eingesetzten Gemisches aus Diarylcarbonat und Phosphonsäurediarylester, in Gegenwart basischer Katalysatoren bei Temperaturen zwischen 80 und 340 °C und Drücken zwischen 790 und 0,133 mbar unter Inertgasatmosphäre umsetzt, wobei das Molverhältnis von Diarylcarbonat zu Phosphonsäurediarylester zwischen 5 zu 95 und 95 zu 5 liegt, und das Molverhältnis der Diphenole zu der Summe der Diarylcarbonate und Phosphonsäurediarylester zwischen 0,91 und 0,99 liegt, und man am Ende der jeweiligen Polykondensation den basischen Katalysator neutralisiert.

2. Verfahren gemäss Anspruch 1, dadurch gekennzeichnet, dass die Reaktion bei Temperaturen zwischen 100 und 320 °C durchgeführt wird.

3. Verfahren gemäss Ansprüchen 1 und 2, dadurch gekennzeichnet, dass die Reaktion bei Drücken zwischen 460 mbar und 1,33 mbar durchgeführt wird.

4. Verfahren gemäss Ansprüchen 1 bis 3, dadurch gekennzeichnet, dass das Molverhältnis von Diarylcarbonat zu Phosphonsäurediarylester zwischen 15 : 85 und 85 : 15 liegt.

5. Aromatische, thermoplastische Polyphosphonatocarbonate erhältlich gemäss Ansprüchen 1 bis 4.

6. Aromatische, thermoplastische Phosphonatocarbonate der Formel (1)

$$Ar-O-\overset{O}{\overset{\|}{M}}-O-X-O-\left[\overset{O}{\overset{\|}{M}}-O-X-O\right]_n-\overset{O}{\overset{\|}{M}}-O-Ar \qquad (1)$$

worin

Ar ein gegebenenfalls durch 1–5 $C_1$–$C_4$-Alkylgruppen und/oder 1–5 F-, Cl- oder Br-Substituenten substituierter Arylrest ist, mit vorzugsweise 6 bis 14 C-Atomen,

$\overset{O}{\overset{\|}{M}}$ das Bindeglied $-\overset{O}{\overset{\|}{C}}-$ oder $-\underset{R}{\underset{|}{\overset{O}{\overset{\|}{P}}}}-$ ist, wobei R

$C_1$–$C_{12}$-Alkyl, $C_2$–$C_{12}$-Alkenyl, $C_6$–$C_{30}$-Aryl, Cycloalkyl, Cycloalkenyl, $C_7$–$C_{30}$-Aralkyl oder $C_8$–$C_{30}$-Aralkenyl ist, wobei die Arylgruppe gegebenenfalls substituiert sein kann durch 1–5 $C_1$–$C_4$-Alkylgruppen und/oder 1–5 Halogenatome wie F, Cl oder Br, und wobei das Verhältnis der Bindeglieder

$-\overset{O}{\overset{\|}{C}}-$ zu $-\underset{R}{\underset{|}{\overset{O}{\overset{\|}{P}}}}-$ im Polyphosphonatcarbonat im Mittel

jeweils zwischen 95 : 5 und 5 : 95 liegt, worin X der Rest eines Diphenols ist und worin n der mittlere Polymerisationsgrad ist, der aus jeweiligen Molekulargewichten Mn (Zahlenmittel) von mindestens 11 000 resultiert.

## Claims

1. Process for the preparation of aromatic, thermoplastic polyphosphonatocarbonates, which is characterised in that diphenols are reacted with diaryl carbonates and phosphonic acid diaryl esters, optionally also employing compounds which are trifunctional or more than trifunctional, in quantities of 0.05 mol% to 3 mol%, based on 100 mol% of aromatic dihydroxy compounds employed, or – in the case of triaryl phosphates – based on 100 mol% of the mixture of diaryl carbonate and phosphonic acid diaryl ester employed, in the presence of basic catalysts at temperatures between 80 °C and 340 °C and under pressures between 790 and 0.133 mbars under an inert gas atmosphere, the molar ratio of diaryl carbonate to phosphonic acid diaryl ester being between 5:95 and 95:5 and the molar ratio of diphenols to the sum of diaryl carbonates and phosphonic acid diaryl esters being between 0.91:1 and 0.99:1 and at the end of the particular polycondensation reaction the basic catalyst is neutralised.

2. Process according to Claim 1, characterised in that the reaction is carried out at temperatures between 100 °C and 320 °C.

3. Process according to Claims 1 and 2, characterised in that the reaction is carried out under pressures between 460 mbars and 1.33 mbars.

4. Process according to Claims 1 to 3, characterised in that the molar ratio of diaryl carbonate to phosphonic acid diaryl ester is between 15:85 and 85:15.

5. Aromatic, thermoplastic polyphosphonatocarbonates obtainable according to Claims 1 to 4.

6. Aromatic, thermoplastic phosphonatocarbonates of the formula (1)

$$Ar-O-\overset{O}{\overset{\|}{M}}-O-X-O-\left[\overset{O}{\overset{\|}{M}}-O-X-O\right]_n-\overset{O}{\overset{\|}{M}}-O-Ar \qquad (1)$$

wherein

Ar is an aryl radical which preferably has 6 to 14 C atoms and is optionally substituted by 1–5 $C_1$–$C_4$-alkyl groups and/or 1–5 F, Cl or Br substituents,

$\overset{O}{\overset{\|}{M}}$ is the connecting member $-\overset{O}{\overset{\|}{C}}-$ or $-\underset{R}{\underset{|}{\overset{O}{\overset{\|}{P}}}}-$

wherein

R is $C_1$–$C_{12}$-alkyl, $C_2$–$C_{12}$-alkenyl, $C_6$–$C_{30}$-aryl, cycloalkyl, cycloalkenyl, $C_7$–$C_{30}$-aralkyl or $C_8$–$C_{30}$-aralkenyl, it being possible for the aryl group to be optionally substituted by 1–5 $C_1$–$C_4$-alkyl groups and/or 1–5 halogen atoms, such as F, Cl or Br, the average ratio of connecting member $-\overset{O}{\overset{\|}{C}}-$ to connecting member $-\underset{R}{\underset{|}{\overset{O}{\overset{\|}{P}}}}-$ in the polyphosphonatocarbonate being in each case between 95:5 and 5:95,

wherein

X is the radical of a diphenol and

wherein

n is the average degree of polymerisation, which results from the particular molecular weights $\bar{M}n$ (number-average) of at least 11,000.

**Revendications**

1. Procédé de production de polyphosphonatocarbonates aromatiques thermoplastiques, caractérisé en ce qu'on fait réagir des diphénols avec des carbonates de diaryle et des esters diaryliques d'acide phosphonique, en utilisant éventuellement des composés trifonctionnels ou de fonctionnalité supérieure en quantités de 0,05 à 3 moles %, par rapport à 100 moles % de composés dihydroxyliques aromatiques utilisés, ou respectivement – dans le cas des phosphates triaryliques – par rapport à 100 moles % du mélange utilisé de carbonate de diaryle et d'ester diarylique d'acide phosphonique, en présence de catalyseurs basiques à des températures comprises entre 80 et 340 °C et à des pressions comprises entre 790 et 0,133 mbar, en atmosphère de gaz inerte, le rapport molaire du carbonate de diaryle, à l'ester diarylique d'acide phosphonique se situant entre 5:95 et 95:5 et le rapport molaire des diphénols à la somme des carbonates diaryliques et des esters diaryliques d'acide phosphonique se situant entre 0,91 et 0,99, et on neutralise le catalyseur basique à la fin de chaque polycondensation.

2. Procédé suivant la revendication 1, caractérisé en ce qu'on conduit la réaction à des températures comprises entre 100 et 320 °C.

3. Procédé suivant les revendications 1 et 2, caractérisé en ce qu'on conduit la réaction à des pressions comprises entre 460 mbars et 1,33 mbar.

4. Procédé suivant les revendications 1 à 3, caractérisé en ce que le rapport molaire du carbonate de diaryle à l'ester diarylique d'acide phosphonique se situe entre 15:85 et 85:15.

5. Polyphosphonatocarbonates aromatiques thermoplastiques pouvant être obtenus suivant les revendications 1 à 4.

6. Polyphosphonatocarbonates aromatiques thermoplastiques du formule (1)

$$\mathrm{Ar{-}O{-}\overset{O}{\overset{\|}{M}}{-}O{-}X{-}O{-}\left[\overset{O}{\overset{\|}{M}}{-}O{-}X{-}O\right]_n{-}\overset{O}{\overset{\|}{M}}{-}O{-}Ar} \qquad (1)$$

dans laquelle

Ar est un reste aryle ayant de préférence 6 à 14 atomes de carbone, substitué le cas échéant par 1 à 5 groupes alkyle en $C_1$ à $C_4$ et/ou 1 à 5 substituants F, Cl ou Br,

$\overset{O}{\overset{\|}{M}}$ représente le maillon $-\overset{O}{\overset{\|}{C}}-$ ou $-\underset{R}{\underset{|}{\overset{O}{\overset{\|}{P}}}}-$, où R est un groupe en $C_1$ à $C_{12}$, alcényle en $C_2$ à $C_{12}$, aryle en $C_6$ à $C_{30}$, cycloalkyle, cycloalcényle, aralkyle en $C_7$ à $C_{30}$ ou aralcényle en $C_8$ à $C_{30}$, le groupe aryle pouvant éventuellement être substitué par 1 à 5 groupes alkyle en $C_1$ à $C_4$ et/ou 1 à 5 atomes d'halogènes tels que F, Cl ou Br, et le rapport des maillons $-\overset{O}{\overset{\|}{C}}-$ aux maillons $-\underset{R}{\underset{|}{\overset{O}{\overset{\|}{P}}}}-$ dans le polyphosphonatocarbonate ayant en moyenne dans chaque cas une valeur comprise entre 95:5 et 5:95, X étant le reste d'un diphénol et n étant le degré moyen de polymérisation qui résulte des poids moléculaires Mn (moyennes en nombre) correspondants ayant une valeur d'au moins 11 000.